(19) **Europäisches Patentamt**
**European Patent Office**
**Office européen des brevets**

(11) **EP 4 564 174 A1**

(12) **EUROPEAN PATENT APPLICATION**

(43) Date of publication:
04.06.2025   Bulletin 2025/23

(21) Application number: 24204170.5

(22) Date of filing: 02.10.2024

(51) International Patent Classification (IPC):
*G06F 11/16* (2006.01)

(52) Cooperative Patent Classification (CPC):
**G06F 11/1641; G06F 11/165; G06F 2201/845**

| | |
|---|---|
| (84) Designated Contracting States:<br>**AL AT BE BG CH CY CZ DE DK EE ES FI FR GB GR HR HU IE IS IT LI LT LU LV MC ME MK MT NL NO PL PT RO RS SE SI SK SM TR**<br>Designated Extension States:<br>**BA**<br>Designated Validation States:<br>**GE KH MA MD TN**<br><br>(30) Priority:   28.11.2023   US 202318522080<br><br>(71) Applicant: **INTEL Corporation**<br>**Santa Clara, CA 95054 (US)** | (72) Inventors:<br>• **A, Priadarshni**<br>**600017 Chennai, TamilNadu (IN)**<br>• **Paz, Israel**<br>**1524100 Kfar Tavor (IL)**<br><br>(74) Representative: **Samson & Partner Patentanwälte mbB**<br>**Widenmayerstraße 6**<br>**80538 München (DE)** |

(54) **APPARATUS AND METHOD FOR CONTROLLING AND DEBUGGING HARDWARE LOCKSTEP MIS-COMPARES**

(57)    An apparatus and method for controlling and debugging hardware lockstep mis-compares. For example, one embodiment of a processor comprises: a plurality of processing elements operable in a redundancy mode, the plurality of processing elements to each execute a same plurality of instructions and produce a corresponding plurality of result signals; comparator circuitry to compare corresponding result signals of the plurality of result signals, the comparator circuitry to generate one or more failure indications when a first one or more result signals produced by a first processing element are different from a corresponding second one or more result signals produced by a second processing element; and masking circuitry to mask a first failure indication of the one or more failure indications when a corresponding mask bit of a mask matrix is set to a first value.

FIG. 1

**Description**

**BACKGROUND**

Field of the Invention

This invention relates generally to the field of computer processors. More particularly, the invention relates to an apparatus and method for controlling and debugging hardware lockstep errors such as mis-compares.

Description of the Related Art

Hardware Lockstep (HWLS) is a feature to support Reliability and Security (RAS) in the server industry. HWLS runs two entities in a system in an Active-Shadow configuration, meaning that the two entities in the module are put in a state where they run or execute identical operations in a cycle-by-cycle modularity.

In a typical implementation, a comparator tree compares "key characteristic" signals from the two entities every cycle, and any divergence observed in this traffic gives rise to what is termed as a "mis-compare." A fault is then signaled, followed by a hard machine check error logged in the machine check banks. This divergence arises due to a defect in one of the entities.

In current implementations, the system actions for posting these types of fault detections are inefficient. In most cases, a halt state is triggered via a micro break point and a root cause is attempted with conventional debug methods. Any non-deterministic but expected divergences also lead to lockstep discrepancies and, in turn, frequent shutdowns at the customer end.

**BRIEF DESCRIPTION OF THE DRAWINGS**

A better understanding of the present invention can be obtained from the following detailed description in conjunction with the following drawings, in which:

A better understanding of the present invention can be obtained from the following detailed description in conjunction with the following drawings, in which:

FIG. 1 illustrates an example computer system architecture;
FIG. 2 illustrates a processor comprising a plurality of cores;
FIG. 3A illustrates a plurality of stages of a processing pipeline;
FIG. 3B illustrates details of one embodiment of a core;
FIG. 4 illustrates execution circuitry in accordance with one embodiment;
FIG. 5 illustrates one embodiment of a register architecture;
FIG. 6 illustrates one example of an instruction format;
FIG. 7 illustrates addressing techniques in accordance with one embodiment;
FIG. 8 illustrates one embodiment of an instruction prefix;
FIGS. 9A-D illustrate embodiments of how the R, X, and B fields of the prefix are used;
FIGS. 10A-B illustrate examples of a second instruction prefix;
FIG. 11 illustrates payload bytes of one embodiment of an instruction prefix;
FIG. 12 illustrates instruction conversion and binary translation implementations;
FIG. 13 illustrates comparator circuitry and masking circuitry for processing redundant execution results in accordance with one embodiment of the invention;
FIG. 14 illustrates a set of per-group results in accordance with one embodiment;
FIG. 15 a method in accordance with embodiments of the invention; and
FIG. 16 illustrates an example of dual-core lockstep operations in accordance with embodiments of the invention.

**DETAILED DESCRIPTION**

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

**Exemplary Computer Architectures**

Detailed below are descriptions of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

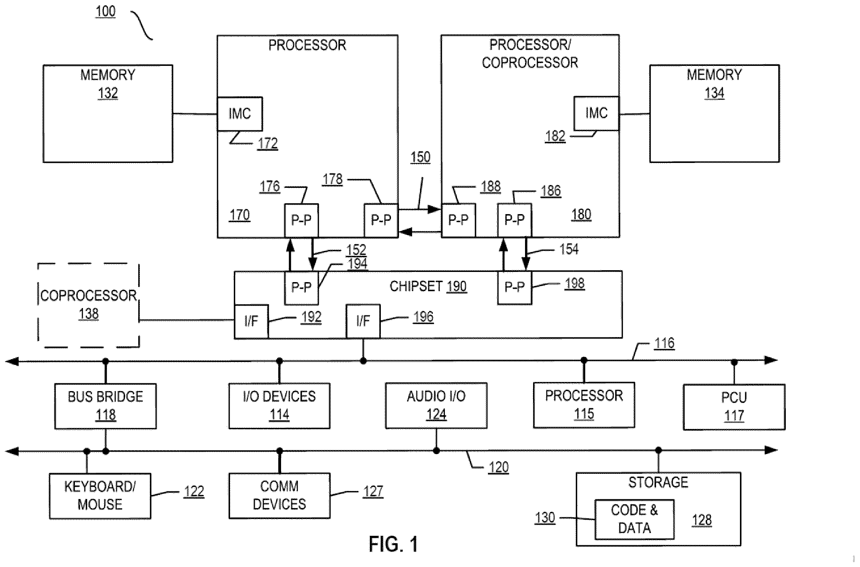

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

**Exemplary Core Architectures, Processors, and Computer Architectures**

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

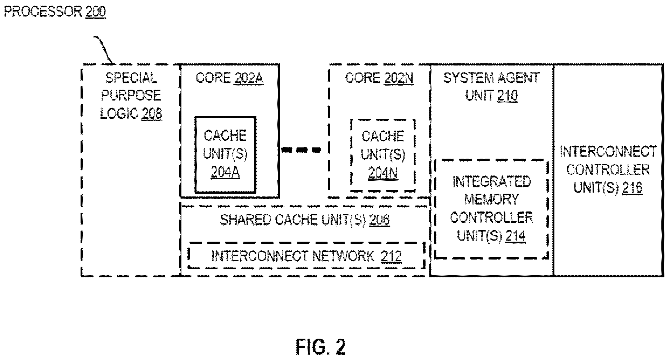

FIG. 2 illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of FIG. 1.

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

**Exemplary Core Architectures**

**In-order and out-of-order core block diagram**

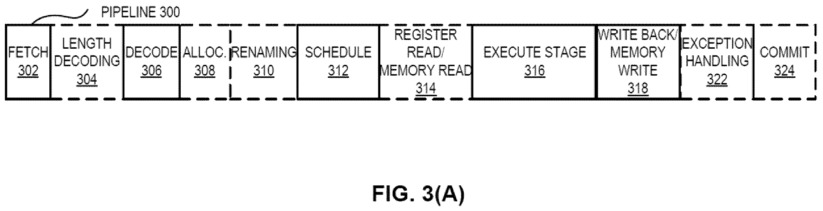

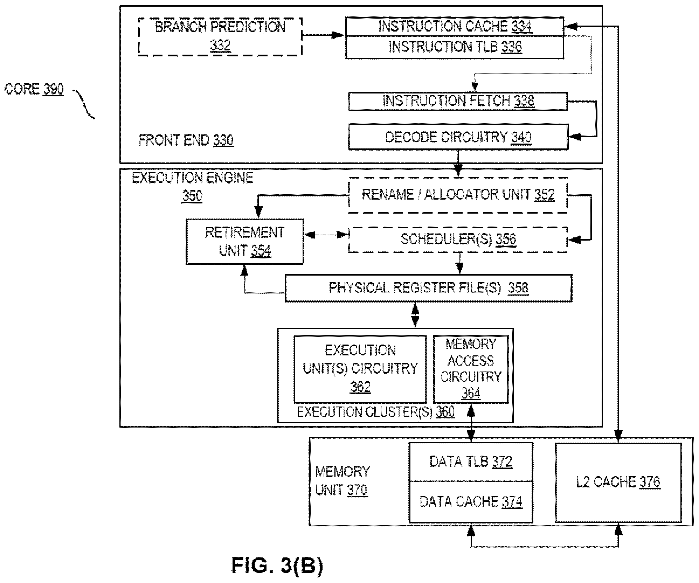

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A),** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

**Exemplary Execution Unit(s) Circuitry**

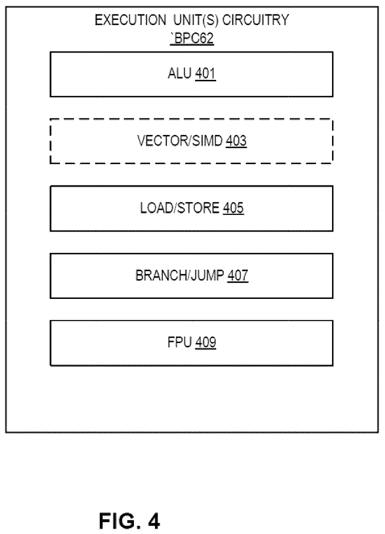

**FIG. 4** illustrates embodiments of execution unit(s) circuitry, such as execution unit(s) circuitry 362 of FIG. 3(B). As illustrated, execution unit(s) circuitry 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

**Exemplary Register Architecture**

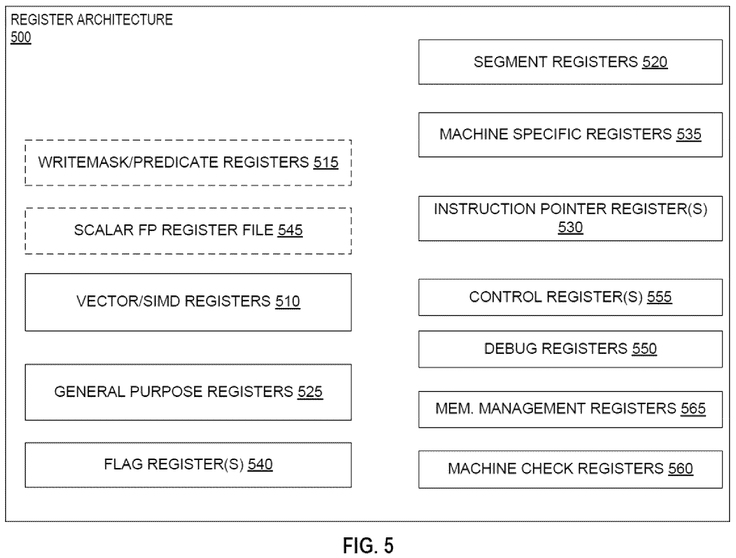

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CRO-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

**Instruction Sets**

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

**Exemplary Instruction Formats**

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

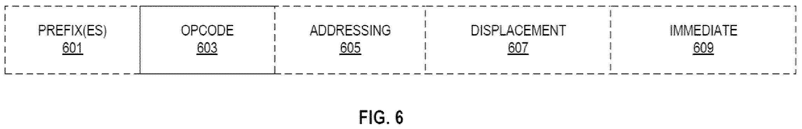

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., Ox66) and address sizes (e.g., Ox67). Certain instructions require a mandatory prefix (e.g., Ox66, OxF2, OxF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

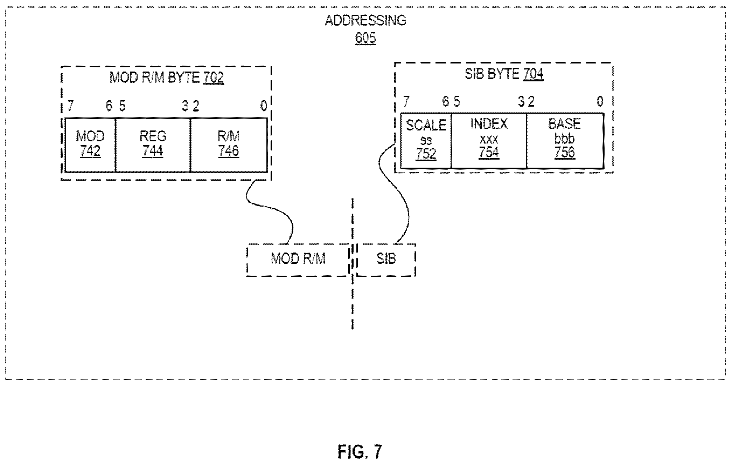

The addressing field 605 is used to address one or more operands of the instruction, such as a location in memory or one or more registers. FIG. 7 illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses $2^{scale}$ * index + base).

Some addressing forms utilize a displacement value to generate a memory address. For example, a memory address may be generated according to $2^{scale}$ * index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

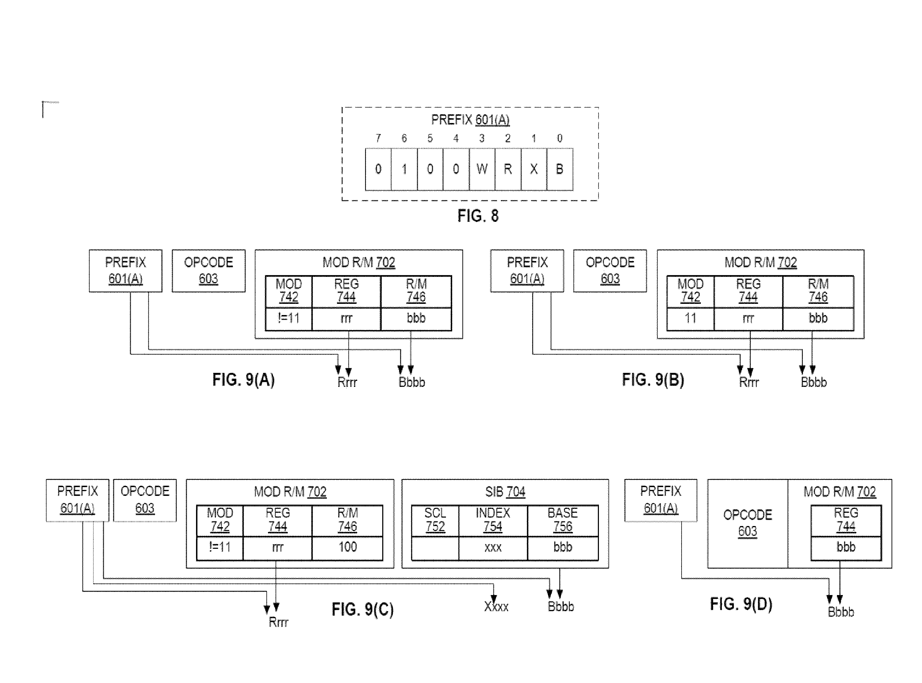

FIG. 8 illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 ($2^4$) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

FIGS. 9(A)-(D) illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

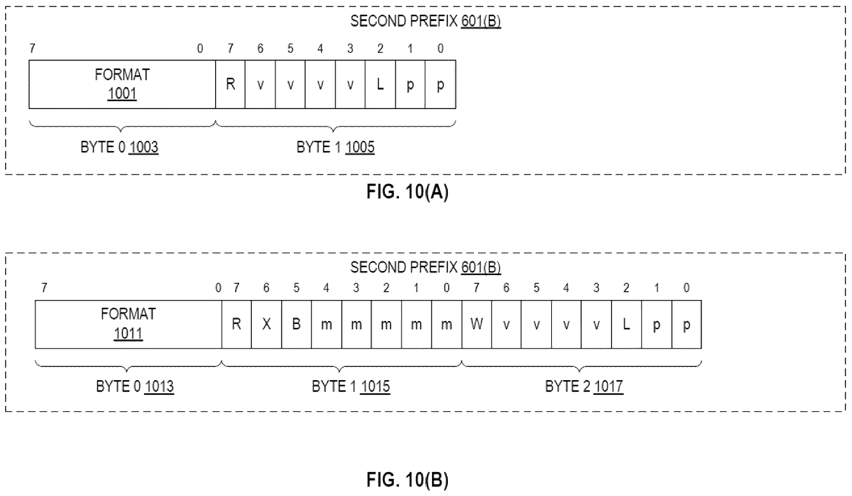

FIGS. 10(A)-(B) illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

FIG. 10(A) illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

FIG. 10(B) illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a OFH leading opcode, 00010 implies a OF38H leading opcode, 00011 implies a leading OF3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

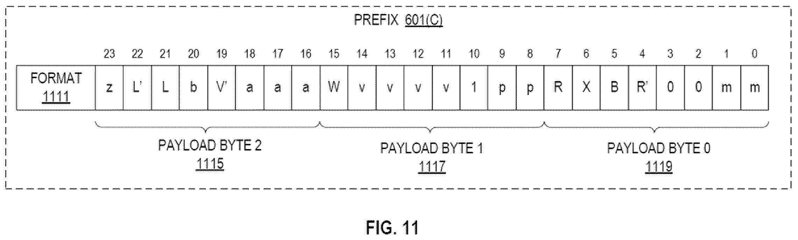

FIG. 11 illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as FIG. 5) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1:** 32-Register Support in 64-bit Mode

|  | 4 | 3 | [2:0] | REG. TYPE | COMMON USAGES |
|---|---|---|---|---|---|
| **REG** | R' | R | ModR/M reg | GPR, Vector | Destination or Source |
| **VVVV** | V' | vvvv |  | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2:** Encoding Register Specifiers in 32-bit Mode

|  | [2:0] | REG. TYPE | COMMON USAGES |
|---|---|---|---|
| **REG** | ModR/M reg | GPR, Vector | Destination or Source |
| **VVVV** | vvvv | GPR, Vector | 2nd Source or Destination |
| **RM** | ModR/M R/M | GPR, Vector | 1st Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

Table **3**: Opmask Register Specifier Encoding

|  | [2:0] | REG. TYPE | COMMON USAGES |
|---|---|---|---|
| **REG** | ModR/M Reg | k0-k7 | Source |
| **VVVV** | vvvv | k0-k7 | 2nd Source |
| **RM** | ModR/M R/M | k0-7 | 1st Source |
| **{k1}** | aaa | k0[1]-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

**Emulation (including binary translation, code morphing, etc.)**

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

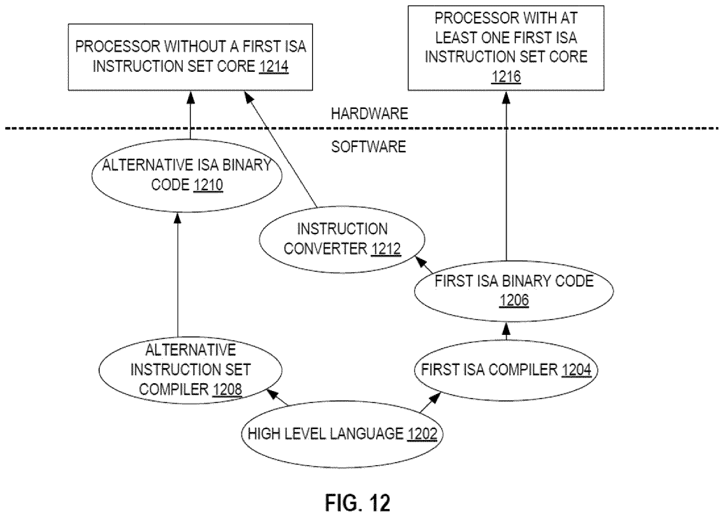

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel® processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA a binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

APPARATUS AND METHOD FOR CONTROLLING AND DEBUGGING HARDWARE LOCKSTEP MIS-COMPARES

Hardware Lockstep (HWLS) is a Reliability and Security (RAS) feature in which two processing entities (e.g., cores, microcontrollers, etc) run or execute identical operations in a cycle-by-cycle modularity. In a typical implementation, a comparator tree compares "key characteristic" signals from the two entities every cycle, and any divergence observed in this traffic gives rise to what is termed as a "mis-compare." A fault is then signaled, followed by a hard machine check error logged in the machine check banks.

Current implementations operate inefficiently when processing these types of fault detections. In most cases, a halt state is triggered via a micro break point and a root cause analysis (RCA) is performed with conventional debug methods. Any non-deterministic but expected divergences also lead to lockstep discrepancies and, in turn, frequent shutdowns at the customer end.

Embodiments of the invention address these problems with a masking mechanism implemented at multiple levels of a hardware comparator structure. In these embodiments, the comparator structure is subdivided into groups and each group associated with a particular number of result signals, where each result signal corresponds to a key characteristic indicator of processing elements/entities (e.g., processor cores, interconnects, caches, interfaces, or other IP blocks). The terms "processing entities" and "processing elements" are used interchangeably herein to refer to any type of IP blocks which support redundant execution such as lockstep execution.

A combination of group-level mask bits and signal-level mask bits are configured to mask out certain trivial or expected faults which would otherwise result in uncorrectable shutdowns. The group-level and signal-level mask bits also provide precise and efficient identification of the source of the fault. In some embodiments, the masking mechanism may be applied on the result produced by the comparator structure before it is stored for observability.

These implementations prevent the parallel execution mode (e.g., lockstep mode) from breaking on non-deterministic and expected functional divergences, thereby enabling forward progress for the customer (e.g., eliminating uncorrectable shutdowns for trivial errors). In some embodiments, the comparator structure is a hardware comparator structure, although the underlying principles of the invention may be implemented in a comparator structure using a combination of hardware and software/firmware.

These embodiments overcome various drawbacks of current implementations including, for example: (1) the system halting for debugging, where a root-cause analysis must be performed and the mis-compare issue fixed before resuming operation (irrespective of the nature of failure encountered); (2) a lack of sufficient data points to perform a root cause analysis to identify the problem; and (3) no distinction between fatal and trivial discrepancies such as selective expected nondeterministic divergences (e.g., variations in temperature, voltage, etc.) which leads to breaking of the lockstep.

Masking the known mis-compare points and providing the ability to collect more mis-compare data points over a period of time expedites the debug process, is highly scalable, and enables cost savings by precisely disabling the faulty processing entity/element (e.g., via having a survivability patch, fuse etc.). In addition, using these techniques, lockstep progress no longer needs to be gated at the system level due to non-deterministic and non-fatal divergences. These techniques can also be utilized at manufacturing, in tests/sorts of the silicon pins. For example, trivial or false failures (if any) generated during test program execution can be masked using these techniques.

In one embodiment, a hardware lockstep mode is implemented for a pair of identical processing elements such as IP blocks (cores, microcontrollers, etc.) in which all functional behavior is expected to be cycle-accurate between the two entities. The point of synchronism verification is established where the traffic of the two entities meets. While embodiments are described in the context of "lockstep" arrangements, the underlying principles of the invention may be implemented in any parallel execution environment in which two (or more) processing entities (e.g., IP blocks such as cores) produce independent results for comparison. These embodiments of the invention may be employed on processors with standard (or non-standard) lock-step configurations, various forms of redundant execution arrangements (including software-based or partial software-based redundancy), and split-lock configurations in which the multiple processor entities perform lockstep processing when in a lockstep mode and independent processing when in "split" mode.

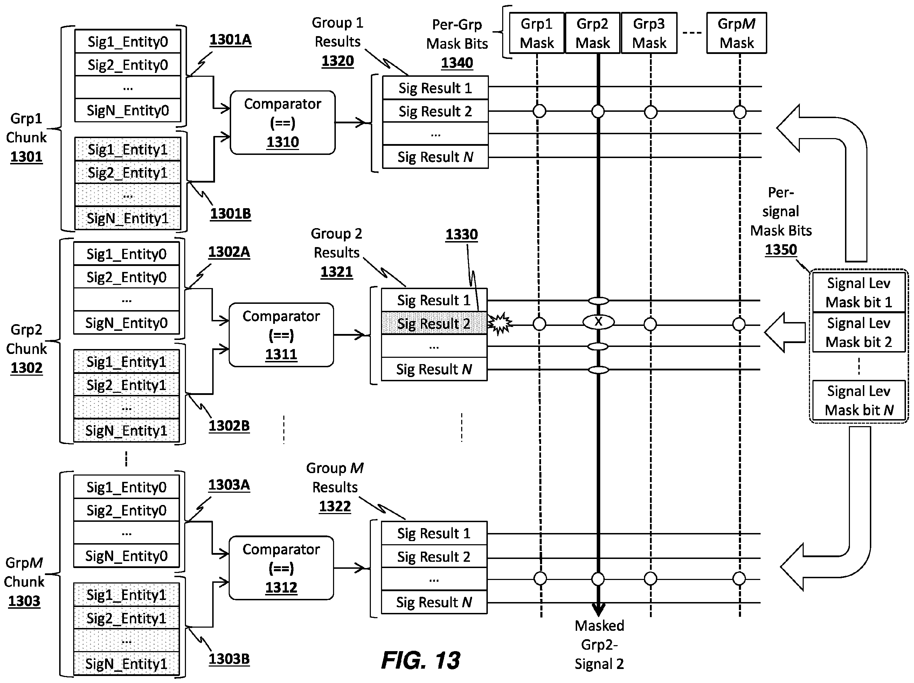

FIG. 13 illustrates an example embodiment in which signals, 1301A-1303A and 1301B-1303B (e.g., execution results or associated information), generated by first and second entities, respectively, are arranged in groups, illustrated as group chunks 1301-1303. Comparators 1310-1312 associated with the group chunks 1301-1303, respectively, compare each signal 1301A-1303A of entity 0 with a corresponding signal 1301B-1303B of entity 1. In particular, comparator 1310 compares signals 1301A with corresponding signals 1301B of group chunk 1301; comparator 1311 compares signals 1302A with corresponding signals 1302B of group chunk 1302; and comparator 1312 compares signals 1303A with corresponding signals 1303B of group chunk 1303.

Each comparator 1310-1312 generates the results 1320-1322 of each respective comparison, indicating if the compared signals are different or equal. In the illustrated example, the majority of the results 1320-1322 indicate that the signals of entity 0 in each chunk 1301-1303 are equal to the corresponding signals of entity 1. However, one particular result 1330 within the set of group 2 results 1321 indicates that the signal for entity 0 is different than the corresponding signal for entity 1, which would normally result in a "mis-compare" signal.

Thus, the total set of signals to be compared are divided into groups and each group 1301-1303 includes a specified number of signals 1301A-B, 1302A-B, 1303A-B, respectively. The width of the various signals may be the same within a group, or may vary within a group or between groups, so long as the corresponding signals being compared between the two entities in a group chunk are always of the same width.

In one embodiment, an orthogonal signal masking scheme is implemented with a number of per-group mask bits ($M$) 1340 and a number of signal level mask bits ($N$) 1350. In this embodiment, the number of signal level mask bits ($N$) is equal to the number of signal results per group chunk 1301-1303 (e.g., signal results 1-$N$ 1320 for group 1, signal results 1-$N$ 1321 for group 2, and signal results 1-$N$ 1322 for group $M$). Each corresponding signal result (e.g., result 1330) is associated with a corresponding one of the per-signal mask bits 1350 (e.g., signal level mask bit 1 is associated with signal result 1 in each group, signal level mask bit 2 is associated with signal result 2 in each group, etc). Similarly, the number of per-group mask bits ($M$) 1340 is equal to the number of groups, and each group chunk 1301-1303 is associated with one of the per-group mask bits 1340 (e.g., group chunk 1 is associated with the group 1 mask bit of the per-group mask bits 1340, the group chunk 2 is associated with the group 2 mask bit, etc).

In operation, each of the interfaces on its path to create a mis-compare is gated with both the corresponding signal level mask bit of the per-signal mask bits 1350 AND the corresponding group level mask bit of the per-group mask bits 1340. In one embodiment, this is done at the final stages of the comparator levels to ensure that the hardware needed for the gating is minimal. The two sets of mask bits 1340, 1350 create a two-dimensional mask matrix as follows:

$$\text{Mask Matrix} = \text{SIGNAL MASK BITS (S1 .... SN)} \overset{\text{GROUP MASK BITS (G1 ... GM)}}{\begin{bmatrix} S1G1 & S1G2 & S1G3 & ...... & S1GM \\ S2G1 & S2G2 & S2G3 & ...... & S2GM \\ ...... & ...... & ...... & ...... & ...... \\ SNG1 & SNG2 & SNG3 & ...... & SNGM \end{bmatrix}}$$

Each row of the above matrix corresponds to a different signal mask bit (e.g., row 1 corresponds to S1, row 2 corresponds to S2, etc) and each column corresponds to a different group mask bit (e.g., column 1 corresponds to G1, column 2 corresponds to G2, etc). The individual bits of the mask matrix are formed with an AND of each signal mask bit and the corresponding group mask bit. Thus, a matrix bit is set to 1 only when both the signal mask bit and the corresponding group mask bit are set to 1.

In one embodiment, the two-dimensional mask matrix is applied to the grouped signal results. A mis-compare result (FAIL), such as shown for signal result 2 1330 of group 2, can be masked and thereby changed to a PASS when gated with both the corresponding signal level mask bit AND the corresponding group mask bit. For example, masking may be directed at specific group-signal combinations to filter out trivial or otherwise insignificant differences between results generated by the two (or more) processor entities (e.g., cores, microcontrollers, etc).

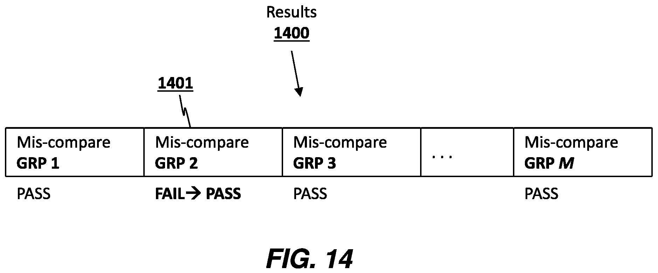

FIG. 14 illustrates an example result 1400 comprising a set of per-group result bits. If the corresponding mask bits are not set, a "MISCOMPARE GRP 2" bit 1401 is set to indicate the mis-compare. If the corresponding mask bits are set (e.g., mask bit 2 and group chunk 2), then the failure is treated as a PASS, as indicated in FIG. 14. The exact interface that fired (signal result 2, group 2 in this example) is identified and may be used for a root cause analysis. For example, the root cause analysis may include setting the signal-level mask bits one after the other until the FAIL is observed.

A minimal amount of hardware may be used for the described embodiments. Considering FIG. 13 as a reference, assuming the number of groups $M = 10$, and the number of signals per group $N = 5$, the details of the hardware savings are as follows. Without the described comparator structure, the number of mask bits needed would be 10 groups x 5 signals per group, i.e., 50 mask bits. This saves on iterations to perform a root cause analysis of the interface but is a bottleneck on the hardware and scalability in the future when more interfaces are added.

In contrast, with the comparator structure of the embodiments of the invention, the signal mask bits are common and applied orthogonally to all groups. Consequently, the number of signal mask bits needed is 5 (due to 5 signals per group) and the number of group mask bits is 10 (unique per group), meaning that the total number of mask bits is 15, which is easily scalable when new interfaces are introduced in subsequent implementations. The cost to be paid would be minimal in terms of iterations, which would be equal to the number of signals plus 1 (i.e., 6 in this example).

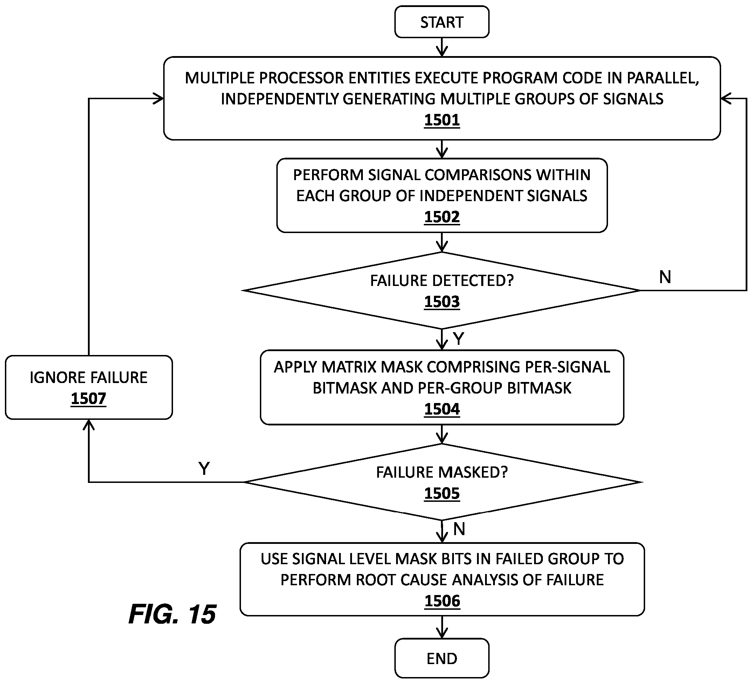

A method in accordance with embodiments of the invention is illustrated in FIG. 15. The method may be implemented on the various processor and system architectures described herein, but is not limited to any particular architecture.

At 1501, multiple processor entities (e.g., cores, microcontrollers, etc) execute program code in parallel to independently generate multiple groups of signals (e.g., results). As mentioned, the parallel execution may be performed by the processor entities in a redundant mode of operation such as a static or configurable lockstep mode or another redundant mode of execution.

At 1502, signal comparisons are performed within each group of independent signals. In particular, each signal/result generated by a first processor entity is compared to a corresponding signal/result of a second processor entity. If the comparisons indicate differences in the signals/results, a failure is generated at 1503.

In one embodiment, at 1504, a matrix mask comprising a combination of a per-signal bitmask and a per-group bitmask is applied to the failure. If the matrix mask indicates that the failure is masked (i.e., based on the associated signal and group chunk), determined at 1505, then the failure is ignored at 1507 and parallel execution continues at 1501.

If the failure is not masked (i.e., the corresponding mask matrix value is not set), then at 1506, the signal level mask bits in the failed group are used to perform a root cause analysis of the failure. Both the group and signal level mask bits are to be set to pinpoint the exact signal that mis compared. For example, the root cause analysis may include setting the signal level mask bits one after the other until the FAIL is observed.

The embodiments of the invention provide a scalable and instantiable solution which is universally applicable to any number of interfaces being compared, irrespective of signal widths and using minimal hardware. These embodiments help to precisely identify and mask out the faulty interface signal and make forward progress which otherwise would be gated until the first failure is addressed. Using these embodiments, expected, non-deterministic divergences of signals/-results do not lead to breaking of the lockstep mode at the system level, resulting in more efficient operation and lower downtime.

The mask bits may be configured and stored in various ways. For example, mask bits may be specified in software or firmware and loaded during system boot. Alternatively, or in addition, mask bits may be configured as fuses or patches on the processor, providing a survivability option at the product level and enabling cost savings by re-using the existing hardware.

In some embodiments, debug of the lockstep mode is performed by dynamically configuring the mask bits on the fly (e.g., at runtime) based on the observed failure. The faulty interface that has led to the mis-compare can be flagged (e.g., within an MSR or other storage).

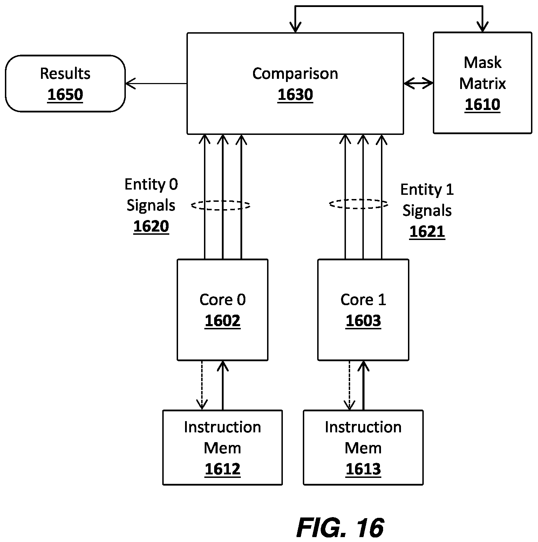

Figure 16 illustrates an example of a first core 1601 and a second core 1602 operating in a lockstep mode and generating corresponding signals/results 1620-1621. As described above, one embodiment of comparison circuitry/logic 1630 performs comparisons of the signals within signal groups and determines whether the results 1650 should reflect any differences in the signals 1620-1621 based on a mask matrix 1610. For example, the comparison circuitry/logic 1620 may detect a failure condition (i.e., differences in signals within a particular group), but may not indicate the failure in the results 1650 if the corresponding mask bit from the mask matrix 1610 is set (i.e., the bit associated with the corresponding group and signal). If the corresponding mask bit is not set, then the results 1650 will indicate the failure condition.

EXAMPLES

The following are example implementations of different embodiments of the invention.

Example 1. A processor, comprising: a plurality of processing elements operable in a redundant processing mode, each processing element of the plurality of processing elements to execute an identical plurality of instructions and produce a corresponding plurality of result signals; comparator circuitry to compare corresponding result signals of the corresponding plurality of result signals, the comparator circuitry to generate one or more failure indications when a first one or more result signals produced by a first processing element differ from a corresponding second one or more result signals produced by a second processing element; and masking circuitry to mask a first failure indication of the one or more failure indications when a corresponding mask bit of a mask matrix is set to a first value.

Example 2. The processor of example 1 wherein the mask matrix is generated based on a combination of signal-level mask bits and group-level mask bits.

Example 3. The processor of examples 1 or 2 wherein the comparator circuitry comprises a plurality of comparators, each comparator of the plurality of comparators configured to perform comparisons of a group of result signals of the corresponding plurality of result signals, each group of result signals associated with a group-level mask bit of a plurality of group-level mask bits.

Example 4. The processor of any of examples 1-3 wherein each group of result signals includes result signals of a particular type.

Example 5. The processor of any of examples 1-4 wherein each group of result signals includes result signals associated with a separate key characteristic indicator of the plurality of processing elements.

Example 6. The processor of any of examples 1-5 wherein the corresponding mask bit of the mask matrix is set to the first value only when a corresponding signal level mask bit of a plurality of signal level mask bits and a corresponding group-level mask bit of the plurality of group-level mask bits are both set to the first value.

Example 7. The processor of any of examples 1-6 wherein the first value comprises a binary value of 1.

Example 8. The processor of any of examples 1-7 wherein the masking circuitry is to mask the first failure indication by changing the first failure indication to a pass indication.

Example 9. The processor of any of examples 1-7 wherein the plurality of group-level mask bits and the signal-level mask bits are to be used to identify a source of the one or more failure indications.

Example 10. A method comprising: operating a plurality of processing elements in a redundant processing mode, each processing element of the plurality of processing elements to execute an identical plurality of instructions and produce a corresponding plurality of result signals; comparing corresponding result signals of the corresponding plurality of result signals; generating one or more failure indications when a first one or more result signals produced by a first processing element differ from a corresponding second one or more result signals produced by a second processing element; and masking a first failure indication of the one or more failure indications when a corresponding mask bit of a mask matrix is set to a first value.

Example 11. The method of example 10 further comprising: generating the mask matrix based on a combination of signal-level mask bits and group-level mask bits.

Example 12. The method of examples 10 or 11 wherein comparing is performed with a plurality of comparators, each comparator of the plurality of comparators configured to perform comparisons of a group of result signals of the corresponding plurality of result signals, each group of result signals associated with a group-level mask bit of a plurality of group-level mask bits.

Example 13. The method of any of examples 10-12 wherein each group of result signals includes result signals of a particular type.

Example 14. The method of any of examples 10-13 wherein each group of result signals includes result signals associated with a separate key characteristic indicator of the plurality of processing elements.

Example 15. The method of any of examples 10-14 wherein the corresponding mask bit of the mask matrix is set to the first value only when a corresponding signal level mask bit of a plurality of signal-level mask bits and a corresponding group-level mask bit of the plurality of group-level mask bits are both set to the first value.

Example 16. The method of any of examples 10-15 wherein the first value comprises a binary value of 1.

Example 17. The method of any of examples 10-16 wherein masking the first failure indication includes changing the first failure indication to a pass indication.

Example 18. The method of any of examples 10-18 further comprising: identifying a source of the one or more failure indications based on the plurality of group-level mask bits and the signal-level mask bits.

Example 19. A machine-readable medium having program code stored thereon which, when executed by a machine, causes the machine to perform operations, comprising: operating a plurality of processing elements in a redundant processing mode, each processing element of the plurality of processing elements to execute an identical plurality of instructions and produce a corresponding plurality of result signals; comparing corresponding result signals of the corresponding plurality of result signals; generating one or more failure indications when a first one or more result signals produced by a first processing element differ from a corresponding second one or more result signals produced by a second processing element; and masking a first failure indication of the one or more failure indications when a corresponding mask bit of a mask matrix is set to a first value.

Example 20. The machine-readable medium of example 19 further comprising program code to cause the machine to perform the operation of: generating the mask matrix based on a combination of signal-level mask bits and group-level mask bits.

Example 21. The machine-readable medium of examples 19 or 20 wherein comparing is performed with a plurality of comparators, each comparator of the plurality of comparators configured to perform comparisons of a group of result signals of the corresponding plurality of result signals, each group of result signals associated with a group-level mask bit of a plurality of group-level mask bits.

Example 22. The machine-readable medium of any of examples 19-21 wherein each group of result signals includes result signals of a particular type.

Example 23. The machine-readable medium of any of examples 19-22 wherein each group of result signals includes result signals associated with a separate key characteristic indicator of the plurality of processing elements.

Example 24. The machine-readable medium of any of examples 19-23 wherein the corresponding mask bit of the mask matrix is set to the first value only when a corresponding signal level mask bit of a plurality of signal-level mask bits and a corresponding group-level mask bit of the plurality of group-level mask bits are both set to the first value.

Example 25. The machine-readable medium of any of examples 19-24 wherein the first value comprises a binary value of 1.

Example 26. The machine-readable medium of any of examples 19-25 wherein masking the first failure indication includes changing the first failure indication to a pass indication.

Example 27. The machine-readable medium of any of examples 19-26 further comprising program code to cause the machine to perform the operation of: identifying a source of the one or more failure indications based on the plurality of group-level mask bits and the signal-level mask bits.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

**Claims**

1.  A processor, comprising:

    a plurality of processing elements operable in a redundant processing mode, each processing element of the plurality of processing elements to execute an identical plurality of instructions and produce a corresponding plurality of result signals;
    comparator circuitry to compare corresponding result signals of the corresponding plurality of result signals, the comparator circuitry to generate one or more failure indications when a first one or more result signals produced by a first processing element differ from a corresponding second one or more result signals produced by a second processing element; and
    masking circuitry to mask a first failure indication of the one or more failure indications when a corresponding mask bit of a mask matrix is set to a first value.

2.  The processor of claim 1 wherein the mask matrix is generated based on a combination of signal-level mask bits and group-level mask bits.

3.  The processor of claim 1 or 2 wherein the comparator circuitry comprises a plurality of comparators, each comparator of the plurality of comparators configured to perform comparisons of a group of result signals of the corresponding plurality of result signals, each group of result signals associated with a group-level mask bit of a plurality of group-level mask bits.

4.  The processor of claim 3 wherein each group of result signals includes result signals of a particular type.

5.  The processor of claim 3 wherein each group of result signals includes result signals associated with a separate key characteristic indicator of the plurality of processing elements.

6.  The processor of claim 3 wherein the corresponding mask bit of the mask matrix is set to the first value only when a corresponding signal level mask bit of a plurality of signal level mask bits and a corresponding group-level mask bit of the plurality of group-level mask bits are both set to the first value.

7.  The processor of claim 6 wherein the first value comprises a binary value of 1.

8.  The processor of any of claims 1 to 7 wherein the masking circuitry is to mask the first failure indication by changing the first failure indication to a pass indication.

9.  The processor of any of claims 3 to 8 wherein the plurality of group-level mask bits and the signal-level mask bits are to be used to identify a source of the one or more failure indications.

10. A method comprising:

    operating a plurality of processing elements in a redundant processing mode, each processing element of the plurality of processing elements to execute an identical plurality of instructions and produce a corresponding plurality of result signals;
    comparing corresponding result signals of the corresponding plurality of result signals;
    generating one or more failure indications when a first one or more result signals produced by a first processing element differ from a corresponding second one or more result signals produced by a second processing element; and
    masking a first failure indication of the one or more failure indications when a corresponding mask bit of a mask matrix is set to a first value.

11. The method of claim 10 further comprising:
generating the mask matrix based on a combination of signal-level mask bits and group-level mask bits.

12. The method of claim 10 or 11 wherein comparing is performed with a plurality of comparators, each comparator of the plurality of comparators configured to perform comparisons of a group of result signals of the corresponding plurality of result signals, each group of result signals associated with a group-level mask bit of a plurality of group-level mask bits.

13. The method of claim 12 wherein each group of result signals includes result signals of a particular type.

14. The method of claim 12 wherein each group of result signals includes result signals associated with a separate key characteristic indicator of the plurality of processing elements.

15. The method of claim 12 wherein the corresponding mask bit of the mask matrix is set to the first value only when a corresponding signal level mask bit of a plurality of signal-level mask bits and a corresponding group-level mask bit of the plurality of group-level mask bits are both set to the first value.

EP 4 564 174 A1

FIG. 1

PROCESSOR 200

| SPECIAL PURPOSE LOGIC 208 | CORE 202A |  | CORE 202N | SYSTEM AGENT UNIT 210 | |
|---|---|---|---|---|---|
| | CACHE UNIT(S) 204A | - - - | CACHE UNIT(S) 204N | INTEGRATED MEMORY CONTROLLER UNIT(S) 214 | INTERCONNECT CONTROLLER UNIT(S) 216 |
| | SHARED CACHE UNIT(S) 206 | | | | |
| | INTERCONNECT NETWORK 212 | | | | |

FIG. 2

FIG. 3(A)

EP 4 564 174 A1

CORE 390

FRONT END 330

| BRANCH PREDICTION 332 | → | INSTRUCTION CACHE 334 |
| INSTRUCTION TLB 336 |

INSTRUCTION FETCH 338

DECODE CIRCUITRY 340

EXECUTION ENGINE 350

RENAME / ALLOCATOR UNIT 352

RETIREMENT UNIT 354

SCHEDULER(S) 356

PHYSICAL REGISTER FILE(S) 358

EXECUTION UNIT(S) CIRCUITRY 362

MEMORY ACCESS CIRCUITRY 364

EXECUTION CLUSTER(S) 360

MEMORY UNIT 370

DATA TLB 372

DATA CACHE 374

L2 CACHE 376

**FIG. 3(B)**

EXECUTION UNIT(S) CIRCUITRY
BPO62

ALU 401

VECTOR/SIMD 403

LOAD/STORE 405

BRANCH/JUMP 407

FPU 409

FIG. 4

REGISTER ARCHITECTURE
500

SEGMENT REGISTERS 520

MACHINE SPECIFIC REGISTERS 535

WRITEMASK/PREDICATE REGISTERS 515

SCALAR FP REGISTER FILE 545

INSTRUCTION POINTER REGISTER(S) 530

VECTOR/SIMD REGISTERS 510

CONTROL REGISTER(S) 555

DEBUG REGISTERS 550

GENERAL PURPOSE REGISTERS 525

MEM. MANAGEMENT REGISTERS 565

FLAG REGISTER(S) 540

MACHINE CHECK REGISTERS 560

FIG. 5

PREFIX(ES) 601 | OPCODE 603 | ADDRESSING 605 | DISPLACEMENT 607 | IMMEDIATE 609

FIG. 6

ADDRESSING 605

SIB BYTE 704

| 7 | 6 5 | 3 2 | 0 |
|---|---|---|---|
| SCALE ss 752 | INDEX xxx 754 | | BASE bbb 756 |

SIB

MOD R/M

MOD R/M BYTE 702

| 7 | 6 5 | 3 2 | 0 |
|---|---|---|---|
| MOD 742 | REG 744 | | R/M 746 |

FIG. 7

26

**PREFIX 601(A)**

| 7 | 6 | 5 | 4 | 3 | 2 | 1 | 0 |
|---|---|---|---|---|---|---|---|
| 0 | 1 | 0 | 0 | W | R | X | B |

**FIG. 8**

PREFIX 601(A) — OPCODE 603 — MOD R/M 702

| MOD 742 | REG 744 | R/M 746 |
|---|---|---|
| !=11 | rrr | bbb |

→ Rrrr  → Bbbb

**FIG. 9(A)**

PREFIX 601(A) — OPCODE 603 — MOD R/M 702

| MOD 742 | REG 744 | R/M 746 |
|---|---|---|
| 11 | rrr | bbb |

→ Rrrr  → Bbbb

**FIG. 9(B)**

PREFIX 601(A) — OPCODE 603 — MOD R/M 702

MOD R/M 702

| MOD 742 | REG 744 | R/M 746 |
|---|---|---|
| !=11 | rrr | 100 |

SIB 704

| SCL 752 | INDEX 754 | BASE 756 |
|---|---|---|
|  | xxx | bbb |

→ Rrrr  → Xxxx  → Bbbb

**FIG. 9(C)**

PREFIX 601(A) — OPCODE 603

MOD R/M 702

| REG 744 |
|---|
| bbb |

→ Bbbb

**FIG. 9(D)**

SECOND PREFIX 601(B)

| 7 | 0 | 7 | 6 | 5 | 4 | 3 | 2 | 1 | 0 |
|---|---|---|---|---|---|---|---|---|---|
| FORMAT 1001 | | R | v | v | v | v | L | p | p |

BYTE 0 1003     BYTE 1 1005

FIG. 10(A)

SECOND PREFIX 601(B)

| 7 | 0 | 7 | 6 | 5 | 4 | 3 | 2 | 1 | 0 | 7 | 6 | 5 | 4 | 3 | 2 | 1 | 0 |
|---|---|---|---|---|---|---|---|---|---|---|---|---|---|---|---|---|---|
| FORMAT 1011 | | R | X | B | m | m | m | m | m | W | v | v | v | v | L | p | p |

BYTE 0 1013     BYTE 1 1015     BYTE 2 1017

FIG. 10(B)

| FORMAT 1111 | PREFIX 601(C) | | | | | | | | | | | | | | | | | | | | | | |
|---|---|---|---|---|---|---|---|---|---|---|---|---|---|---|---|---|---|---|---|---|---|---|---|
| | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
| | z | L' | L | b | V' | a | a | a | W | v | v | v | v | 1 | p | p | R | X | B | R' | 0 | 0 | m | m |

PAYLOAD BYTE 2
1115

PAYLOAD BYTE 1
1117

PAYLOAD BYTE 0
1119

FIG. 11

FIG. 12

EP 4 564 174 A1

FIG. 13

Results
**1400**

**1401**

| Mis-compare<br>**GRP 1** | Mis-compare<br>**GRP 2** | Mis-compare<br>**GRP 3** | . . . | Mis-compare<br>**GRP M** |
|---|---|---|---|---|
| PASS | **FAIL→ PASS** | PASS | | PASS |

*FIG. 14*

START

MULTIPLE PROCESSOR ENTITIES EXECUTE PROGRAM CODE IN PARALLEL,
INDEPENDENTLY GENERATING MULTIPLE GROUPS OF SIGNALS
1501

PERFORM SIGNAL COMPARISONS WITHIN
EACH GROUP OF INDEPENDENT SIGNALS
1502

FAILURE DETECTED?
1503

N

Y

IGNORE FAILURE
1507

APPLY MATRIX MASK COMPRISING PER-SIGNAL
BITMASK AND PER-GROUP BITMASK
1504

Y

FAILURE MASKED?
1505

N

USE SIGNAL LEVEL MASK BITS IN FAILED GROUP TO
PERFORM ROOT CAUSE ANALYSIS OF FAILURE
1506

*FIG. 15*

END

**FIG. 16**

Europäisches
Patentamt

European
Patent Office

Office européen
des brevets

## EUROPEAN SEARCH REPORT

**Application Number**

EP 24 20 4170

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/114243 A1 (SANTONI UMBERTO [US] ET AL) 18 April 2019 (2019-04-18)<br>* figures 1,4a *<br>* paragraph [0054] - paragraph [0067] *<br>- - - - - | 1-15 | INV.<br>G06F11/16 |
| A | US 2004/078732 A1 (MEANEY PATRICK J [US]) 22 April 2004 (2004-04-22)<br>* paragraph [0008] *<br>* paragraph [0037] - paragraph [0039] *<br>* paragraph [0045] *<br>* claims 7-9 *<br>- - - - - | 1-15 | |
| A | US 2020/125439 A1 (HAN DAPENG [NO]) 23 April 2020 (2020-04-23)<br>* paragraph [0019] *<br>* figures 1A,1B *<br>- - - - - | 1-15 | |

**TECHNICAL FIELDS SEARCHED (IPC)**

G06F

The present search report has been drawn up for all claims

| Place of search | Date of completion of the search | Examiner |
|---|---|---|
| Munich | 3 March 2025 | Alonso Nogueiro, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4170

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | | Publication date |
|---|---|---|---|---|
| US 2019114243 A1 | 18-04-2019 | CN | 113168366 A | 23-07-2021 |
| | | EP | 3895018 A1 | 20-10-2021 |
| | | US | 2019114243 A1 | 18-04-2019 |
| | | WO | 2020123159 A1 | 18-06-2020 |
| US 2004078732 A1 | 22-04-2004 | NONE | | |
| US 2020125439 A1 | 23-04-2020 | CN | 111061582 A | 24-04-2020 |
| | | US | 2020125439 A1 | 23-04-2020 |

EPO FORM P0459

For more details about this annex : see Official Journal of the European Patent Office, No. 12/82